# EUROPÄISCHE PATENTSCHRIFT

(11) **EP 3 943 830 B1**
(45) Veröffentlichungstag und Bekanntmachung des Hinweises auf die Patenterteilung: **11.01.2023**
(21) Anmeldenummer: 20186719.9
(22) Anmeldetag: 20.07.2020
(51) Int. Cl.: F24F 13/24, F24F 7/013, F24F 12/00, F24F 7/06

(54) **BELÜFTUNGSVORRICHTUNG UND VERFAHREN ZUR GERÄUSCHREDUZIERUNG IN EINER BELÜFTUNGSVORRICHTUNG**
VENTILATION DEVICE AND METHOD OF NOISE REDUCTION IN A VENTILATION DEVICE
DISPOSITIF DE VENTILATION ET PROCÉDÉ DE REDUCTION DU BRUIT DANS UND DISPOSITIF DE VENTILATION

(43) Veröffentlichungstag der Anmeldung: 26.01.2022
(73) Patentinhaber: inVENTer GmbH, 07751 Löberschütz (DE)
(72) Erfinder: Gottschall, Rico, 07751 Jena (DE); Geisenhainer, Ralph, 07646 Rausdorf (DE)
(74) Vertreter: Gleim Petri Oehmke Patent- und Rechtsanwaltspartnerschaft mbB

(56) Entgegenhaltungen:
- DE-U1-202012 103 045
- DE-U1-202020 000 075
- US-A1- 2011 308 883

## Beschreibung

### Gebiet der Erfindung

Die Erfindung betrifft eine Belüftungsvorrichtung zum Be- und Entlüften eines Raumes. Eine solche Belüftungsvorrichtung umfasst eine Wandeinbauhülse zur Verbindung einer Innenseite eines Raumes mit einer Außenseite. Unter der Außenseite wird eine äußere Umgebung außerhalb des Gebäudes, in welchem sich der betreffende Raum, der belüftet werden soll, befindet, verstanden. Die Belüftungsvorrichtung umfasst außerdem mindestens einen in der Wandeinbauhülse angeordneten Ventilator mit einem Motor und einer Rotationsachse. Der Ventilator ist in einem ersten Betriebszustand mit einer Zuluft-Förderrichtung von der Außenseite zur Innenseite zur Förderung von Zuluft von der Außenseite zu Innenseite des Raumes betreibbar. Der Ventilator ist in der Wandeinbauhülse angeordnet, d.h. in dem von der Wandeinbauhülse umschlossenen Raum. Schließlich umfasst die Belüftungsvorrichtung auch Mittel zur aktiven Geräuschreduzierung mit mindestens einem Lautsprecher, mehreren Mikrofonen und einer Steuereinheit. Weitere Elemente, wie ein zwischen dem Ventilator und der Außenseite in der Wandeinbauhülse angeordneter Wärmespeicher, ein oder mehrere Leitwerke, oder Elemente zur Schalldämmung sind optional. Oft werden solche Belüftungsvorrichtungen im Reversierbetrieb betrieben, d. h. sie weisen einen zweiten Betriebszustand auf, in welchem sie entlang einer Abluft-Förderrichtung von der Innenseite zur Außenseite Abluft von der Innenseite zur Außenseite fördern. Auch dies ist jedoch optional.

### Stand der Technik

Im Stand der Technik sind solche Systeme seit Längerem bekannt. Derartige Belüftungsvorrichtungen werden beispielsweise im modernen Wohnungs- und Hausbau für die Belüftung von Räumen oder Zimmern von Ein- und Mehrfamilienhäusern eingesetzt. Es handelt sich um dezentral angeordnete Belüftungsvorrichtungen, die einzelne Räume belüften oder paarweise, zonal in Gebäuden eingesetzt werden. Sie sind daher recht kompakt gebaut. Im Gegensatz dazu sind zentrale Belüftungsvorrichtungen wesentlich größer dimensioniert, da sie eine Vielzahl von Räumen gleichzeitig belüften müssen, an solche zentralen Belüftungsvorrichtungen werden andere Anforderungen als an dezentrale Anordnungen gestellt: Zentrale Belüftungsvorrichtungen müssen höhere Luftströme erreichen und verfügen in der Regel auch über größere Ventilatoren und längere Beförderungswege. Dezentrale Belüftungsvorrichtungen, die nur einzelne Räume belüften, können dagegen vergleichsweise kompakt gebaut werden. Die Durchmesser von Belüftungsvorrichtungen, die für solche Zwecke verwendet werden können, liegen üblicherweise im Bereich zwischen etwa 100 mm und 300 mm, die Belüftungsvorrichtungen werden beispielsweise im Rahmen von Energiesparmaßnahmen zur effizienten Belüftung bzw. Frischluftzufuhr eingesetzt, u.a. in Passivhäusern.

Da die Geräte zur Be- und Entlüftung dezentral im Haus platziert werden, sind in den Räumen mehr oder weniger deutliche Schallemissionen wahrnehmbar, zum einen Schallemissionen, die vom Gerät, d.h. insbesondere dem Ventilator, selbst ausgehen, zum anderen können auch Außengeräusche in den Raum eindringen. Die Auskleidung der Wandeinbauhülse mit einem schallabsorbierenden Material bringt hier zwar schon eine Verbesserung, ebenso wie die Verwendung von Kulissenschalldämpfern. All diese Maßnahmen sind in der Lage, den Schall passiv zu reduzieren, so dass er subjektiv geringer ist. Allerdings sind diese Art von Schallreduzierung Grenzen gesetzt und sie beeinflussen teilweise signifikant den Luftvolumenstrom der Geräte negativ.

Aus diesem Grund wurden Systeme entwickelt, die in der Lage sind, den Schall aktiv zu reduzieren. Solche Systeme nehmen Geräusche einer Schallquelle auf und strahlen Schallwellen ab, die sich mit den Schallwellen der Schallquelle überlagern und im besten Fall zu einer Auslöschung des Geräuschs führen. Ziel ist es, Schallwellen einer bestimmten Frequenz jeweils mit Schallwellen gleicher Frequenz überlagern, jedoch um eine Phase von 180° versetzt; in diesem Fall ist die Auslöschung ideal.

So wird beispielsweise in der EP 2 378 133 A2 ein Lüftungssystem für Räume beschrieben, welches Mittel zur Reduzierung des Lärms aufweist. Darunter werden zum einen Geräusche verstanden, welche von einem Ventilator des Lüftungssystems oder dem Motor des Ventilators hervorgerufen werden, zum anderen aber auch Umgebungsgeräusche. Jedoch werden nur die vom Ventilator oder dem Motor hervorgerufenen Geräusche reduziert. Umgebungsgeräusche werden zwar herausgefiltert, jedoch nur, um die Motor- und Ventilatorgeräusche besser identifizieren zu können. Die Geräusche des Motors und des Ventilators werden mit einem ersten Mikrofon aufgenommen, wobei in einer bevorzugten Ausgestaltung zwei Mikrofone verwendet werden, die in Luftstromrichtung hintereinander angeordnet sind, um Umgebungsgeräusche herauszufiltern, wobei jedoch nur das Lüftergeräusch gedämpft werden soll. Ein weiteres Mikrofon ist relativ zum ersten Mikrofon aufwärts im Luftstrom positioniert und dient dazu, das gedämpfte Geräusch zu detektieren, welches sich aus der Überlagerung der Schallwellen des Ventilators und der Schallwellen eines von einem Lautsprecher abgestrahlten Auslöschsignals, welche den Schallwellen des Ventilators entgegenlaufen und dieses Geräusch mindern sollen, ergibt. Das von diesem weiteren Mikrofon aufgezeichnete Signal wird zur Kontrolle und Steuerung des vom Lautsprecher abgestrahlten Auslöschsignals verwendet. Die Schallwellen, der Lautsprecher aussendet, sowie die Schallwellen, welche vom Ventilator kommen, laufen einander entgegengesetzt. Der Lautsprecher strahlt also seine Schallwellen in Richtung des Ventilators ab.

In der EP 0 557 071 A2 wird eine Vorrichtung zur aktiven Geräuschkontrolle für Räume beschrieben, wobei als bevorzugtes Einsatzgebiet Klimageräte genannt werden. Beispielsweise zeigt Fig. 6 dieses Dokuments eine Einrichtung mit 2 Mikrofonen am Rand eines Luftkanals sowie einem Mikrofon in der Mitte auf der zentralen Achse. Jeweils unterhalb der Mikrofone sind Lautsprecher angeordnet, welche den Schall in Luftstromrichtung abstrahlen. Der Ventilator ist im Luftstrom nach den Mikrofonen bzw. Lautsprechern angeordnet, strahlt jedoch Schallwellen überwiegend in die rückwärtige Richtung aus; diese Geräusche sollen gedämpft werden. Der Schall des Lautsprechers wird also in Richtung des Klimageräts, von dem Raum weg abgestrahlt.

Die DE 20 2012 103045 U1 offenbart eine Heiz- und Kühleinrichtung mit einem Luftkanal und einem Ventilator zum Zuführen von Luft in den Raum, wobei in dem Luftkanal ein erstes und ein zweites Mikrofon angeordnet sind, dabei sind beide Mikrofone zwischen der Rotationsachse des Ventilators und der Gehäusewandung angeordnet, eine Steuereinheit zur Erzeugung von Gegengeräuschen ist vorgesehen um Gegengeräuschsignale an den Lautsprechern zur Abstrahlung als Schall auf den vorbeiströmenden Luftstrom zu übertragen. Dabei werden Geräusche des Luftstroms und/oder des Motor des Ventilators gedämpft.

Die US 2011/308883 A1 offenbart eine dezentrale Belüftungsvorrichtung mit mehreren Mikrofonen zur Kompensation von Außengeräuschen und Lüftermotorgeräuschen.

Bei bekannten dezentralen Belüftungsvorrichtungen mit Wärmerückgewinnung ist die Wahrnehmung des Lüftergeräuschs bzw. des Luftgeräuschs eine Herausforderung, die Geräusche führen mitunter zu Unzufriedenheit beim Kunden. Eine derzeit gängige Lösung ist die Reduzierung der Lüfterdrehzahl. Dabei wird aber auch der Luftstrom deutlich reduziert, so dass eine effektive Lüftung nicht mehr erfolgen kann.

### Beschreibung der Erfindung

Aufgabe der Erfindung ist es daher, eine Belüftungsvorrichtung der eingangs beschriebenen Art dahingehend weiterzuentwickeln, dass zum einen eine möglichst effiziente Unterdrückung sowohl von Geräuschen von der Außenseite als auch von Geräuschen, die vom Ventilator erzeugt werden, erreicht wird, wobei andererseits der Aufbau den Luftstrom möglichst wenig beeinträchtigten soll.

Diese Aufgabe wird durch eine Belüftungsvorrichtung mit den Merkmalen von Anspruch 1, sowie durch ein Verfahren mit den Merkmalen von Anspruch 12 gelöst. Vorteilhafte Ausgestaltungen der Erfindung sind in den abhängigen Ansprüchen definiert. Dabei sind bei der erfindungsgemäßen Lüftungsvorrichtung die im Folgenden beschriebenen Merkmale vorgesehen.

Die Membran des Lautsprechers ist innenraumseitig angeordnet, d. h. in dem Bereich zwischen Ventilator und Innenseite. Dabei ist sie so angeordnet, dass sie Schall, d.h. den Gegenschall, in Zuluft-Förderrichtung abstrahlt. Dies hat den Vorteil, dass der Luftstrom in Zuluft-Förderrichtung weniger beeinträchtigt wird und effizienter strömen kann. Ein Lautsprecher, dessen Membran entgegen der Zuluft-Förderrichtung weist, wirkt wie ein Topf und behindert den Luftstrom. Die Membran hat einen höheren Luftwiderstand als beispielsweise ein Gehäuse des Lautsprechers und verwirbelt den Luftstrom zusätzlich. Bei der erfindungsgemäßen Anordnung wird der Luftstrom also effektiv am Lautsprechergehäuse vorbeigeführt und es werden zusätzliche Schallemissionen - etwa durch Verwirbelungen - vermieden.

Zur Aufnahme des Schalls ist ein erstes Mikrofon axial auf der Rotationsachse innenraumseitig angeordnet. Es ist auf den Ventilator gerichtet und nimmt überwiegend Geräuschsignale, die vom Motor des Ventilators verursacht werden, auf. Bei dem Ventilator kann es sich beispielsweise um einen Radialventilator oder um einen - für dezentrale Lüftungen häufig verwendeten - Axialventilator handeln. Durch die axiale Position ist eine besonders gute Fokussierung auf die Geräusche des Motors möglich, da der Motor ebenfalls axial angeordnet ist. Ein zweites Mikrofon ist radial zwischen der Rotationsachse und der Wandeinbauhülse angeordnet. Es ist entweder auf die Rotationsachse oder die Wandeinbauhülse gerichtet und ist dazu ausgebildet, überwiegend die vom Luftstrom selbst verursachten Geräuschsignale sowie die Geräuschsignale, die vom Luftstrom im Gerät selbst verursacht werden, aufzunehmen. Durch diese Anordnung ist eine besonders gute Fokussierung auf die nicht vom Motor verursachten Geräuschsignale möglich.

Die Steuereinheit ist zu Erzeugung von Geräuschgegensignalen auf Basis der von den Mikrofonen aufgenommenen Geräuschsignale und zur Übermittlung der Geräuschgegensignale an den Lautsprecher zur Abstrahlung als Schall von dort ausgebildet. Im Ergebnis sind auf der Innenseite des Raumes solche Geräusche, die vom Luftstrom und/oder vom Motor des Ventilators erzeugt werden, und solche Geräusche, die von der Außenseite kommen, gedämpft.

In einer bevorzugten Ausführung, bei welcher der Ventilator als Axialventilator ausgestaltet ist, ist der Lautsprecher in einem axial auf der Verlängerung der Rotationsachse angeordneten Gehäuse, welches vorzugsweise mit einer Rotationssymmetrie um die Rotationsachse ausgebildet ist, fixiert, wobei die Membran des Lautsprechers axial auf oder neben der Rotationsachse angeordnet ist. Durch diese symmetrische Anordnung lassen sich die Geräuschgegensignale am effizientesten mit den Geräuschsignalen überlagern, verglichen mit Anordnungen, bei denen der Lautsprecher seitlich angeordnet ist und nicht in axialer Richtung abstrahlt, sondern in radialer Richtung. Da zudem der Motor des Ventilators - zumindest beim Axialventilator - in der Regel ebenfalls auf der Achse lokalisiert ist oder zumindest eine Nabe des Ventilators, wird der Luftstrom nur geringfügig beeinträchtigt. Das Gehäuse kann dabei an seinem rückwärtigen Ende, welches in Richtung des Ventilators zeigt, stromlinienförmig ausgebildet sein, um einer Verwirbelung des Luftstroms entgegenzuwirken.

Im Falle eines Radialventilators ist diese axiale Anordnung auf einer Verlängerung der Rotationsachse ebenfalls möglich, sofern die Umlenkung der Luft in Strömungsrichtung zur Innenseite erst anschließend erfolgt. Es gelten dann ebenfalls die zum Axialventilator gemachten Angaben. Andererseits ist es bei diesen Ventilatoren ebenfalls möglich, den Lautsprecher bzw. dessen Membran ebenso wie das zweite Mikrofon nicht axial auf der Rotationsachse des Motors anzuordnen, sondern nach der Umlenkung in Zuluft-Förderrichtung, also beispielsweise senkrecht zur Rotationsachse, wenn der Luftstrom durch den Radialventilator um 90° umgelenkt wird.

Zweckmäßig wird das Gehäuse dazu über Abstandshalter in der Wandeinbauhülse fixiert. Auch die Abstandshalter, die sich vom Gehäuse beispielsweise radial in Richtung der Wandeinbauhülse erstrecken, weisen vorzugsweise eine Stromlinienform auf, um den Luftstrom möglichst wenig zu beeinträchtigen. Die Fixierung kann dabei kraftschlüssig erfolgen, wenn beispielsweise die Wandeinbauhülse mit einem schallabsorbierenden Material ausgekleidet ist, ergänzend oder alternativ auch formschlüssig.

Die Steuereinheit ist bevorzugt ebenfalls im Gehäuse angeordnet; dies ermöglicht einen kompakten Aufbau. Kabel für die Stromversorgung können durch die Abstandshalter in die Wandeinbauhülse verlegt werden. In einer besonders bevorzugten Ausgestaltung umfasst die Belüftungsvorrichtung jedoch außerdem mindestens einen Innenabschluss zur Abdeckung der Wandeinbauhülse an der Innenseite und/oder zur Ablenkung des Luftstroms, wobei die Steuereinheit im Innenabschluss angeordnet ist. Auf diese Weise hat ein Techniker leichteren Zugang zu der Steuereinheit, falls diese ausfällt und ganz oder teilweise gewechselt werden muss.

Die Mikrofone sind bevorzugt als MEMS-Mikrofone ausgebildet. Dies ermöglicht einen besonders flachen Aufbau, so dass durch die Mikrofone der Luftstrom ebenfalls möglichst wenig beeinträchtigt wird. Sofern der Lautsprecher in einem Gehäuse angeordnet ist, sind die Mikrofone bevorzugt auf den Außenseiten des Gehäuses fixiert. Vorteilhaft sind die Mikrofone mit einer die Geräuschsignale teilweise filternden Filterkappe versehen. Damit lassen sich beispielsweise bestimmte Frequenzen herausfiltern, die entstehen, wenn ein Luftstrom an einem Mikrofon vorbeiströmt, die jedoch eine Person, die sich in dem Raum, der belüftet wird, befindet, nicht wahrnehmen würde. Die Funktion der Filterkappe ist ähnlich der Funktion eines Windschutzes, welcher über Handmikrofone gezogen werden kann. Dadurch lassen sich Geräusche des Luftstroms bei tiefen Frequenzen, die durch Verwirbelungen entstehen, dämpfen, ohne dass die Wirkung der Geräuschdämpfung beeinträchtigt würde.

Dabei hat sich experimentell herausgestellt, dass der Abstand zwischen dem ersten Mikrofon und dem Lautsprecher sowie zwischen dem zweiten Mikrofon und dem Lautsprecher jeweils nicht mehr als 350 mm betragen sollte. Je länger die Distanz zwischen Mikrofonen und Lautsprecher ist, desto größer ist die Wahrscheinlichkeit, dass die Geräuschsignale auf dem Weg zwischen Mikrofonen und Lautsprechern durch äußere Einflüsse verändert werden und so nicht mehr phasenversetzt zu den Geräuschgegensignalen korrespondieren. Bei größeren Abständen lässt die Wirkung der Geräuschdämpfung nach.

Während das erste Mikrofon auf der Rotationsachse des Ventilators bzw. auf einer Verlängerung dieser Rotationsachse, die im Falle eines Axialventilators auch eine Symmetrieachse der Wandeinbauhülse bildet, sofern diese rotationssymmetrisch ist, und ebenfalls als Rotationsachse bezeichnet wird, angeordnet ist, hat man für die Anordnung des zweiten Mikrofons mehrere Möglichkeiten. Dabei sollte es nicht zu nah beim ersten Mikrofon angeordnet sein, da sonst die Motorgeräusche dominieren könnten. Andererseits sollte es auch nicht zu nah an der Wandeinbauhülse angeordnet sein, da dort möglicherweise die Geräuschsignale durch die Wandeinbauhülse selbst gestört werden könnten. Vorteilhaft ist es so angeordnet, dass der Abstand zwischen dem zweiten Mikrofon und der Rotationsachse etwa die Hälfte des Abstandes zwischen der Rotationsachse und der Wandeinbauhülse beträgt. Teilt man den Abstand bzw. eine Linie zwischen Rotationsachse und Wandeinbauhülse in drei Teile, so ist das zweite Mikrofon bevorzugt im mittleren Drittel angeordnet. Dort ist die Beeinflussung sowohl durch Motorgeräusche als auch durch die Fläche der Wandeinbauhülse am geringsten und die Geräuschsignale, die durch den Luftstrom selbst verursacht werden, sowie diejenigen, die von der Außenseite hereingetragen werden, können dort am wenigsten verfälscht aufgenommen werden.

In einer vorteilhaften Ausgestaltung, die allerdings für das Funktionieren der Erfindung nicht notwendig ist, wird der Ventilator im Reversierbetrieb betrieben. Er ist somit in einem zweiten Betriebszustand betreibbar, zur Förderung von Abluft von der Innenseite zur Außenseite des Raumes entlang einer Abluft-Förderrichtung. Auch hier kann eine geräuschreduzierende Wirkung erzielt werden, da weiterhin Geräusche des Motors sowie Geräusche von außen nach innen dringen, auch wenn der Luftstrom nach außen gerichtet ist.

Im Betrieb einer Belüftungsvorrichtung mit mindestens einem Ventilator, der in einer Wandeinbauhülse eingebaut ist, rotiert der Ventilator um eine Rotationsachse und fördert dabei in einem ersten Betriebszustand Zuluft entlang einer Zuluft-Förderrichtung von einer Außenseite eines Raumes zu einer Innenseite des Raumes. Ein erstes Mikrofon nimmt dabei überwiegend Geräuschsignale auf, die von einem Motor des Ventilators erzeugt werden, und übermittelt diese an eine Steuereinheit. Ein zweites Mikrofon nimmt überwiegend von einem Luftstrom erzeugte Geräuschsignale sowie von der Außenseite des Raumes in Zuluft-Förderrichtung transportierte Geräuschsignale auf und übermittelt diese als Geräuschsignale an die Steuereinheit. Die Steuereinheit erzeugt dann auf Basis der von den Mikrofonen aufgenommenen Geräuschsignale entsprechende Geräuschgegensignale und übermittelt diese an einen auf der Rotationsachse angeordneten Lautsprecher. Der Lautsprecher strahlt über eine Membran die Geräuschgegensignale in Zuluft-Förderrichtung als Schall ab, so dass auf der Innenseite des Raumes solche Geräusche, die vom Luftstrom und vom Motor des Ventilators erzeugt werden, und solche Geräusche, die von der Außenseite kommen, gedämpft werden.

Sofern die Belüftungsvorrichtung im Reversierbetrieb betrieben werden kann und der Ventilator in einem zweiten Betriebszustand Abluft entlang einer Abluft-Förderrichtung von der Innenseite des Raumes zur Außenseite fördert, und die Belüftungsvorrichtung zwischen dem ersten und dem zweiten Betriebszustand umgeschaltet werden kann, ist die Vorrichtung dazu ausgelegt, während des Umschaltens mittels der Steuereinheit Geräuschsignale zu erzeugen, die einem Grundgeräusch der Belüftungsvorrichtung im Betrieb entsprechen, so dass ein gleich bleibendes Geräuschbild während des Umschaltens erzeugt wird und ein Umschaltgeräusch möglichst eliminiert wird. Das Grundgeräusch umfasst mindestens das Grundgeräusch des Motors des Ventilators im Betrieb, bevorzugt aber auch das Geräusch des Luftstroms. Auf diese Weise wird die Wahrnehmung des Umschaltens und des damit verbundenen Geräuschs als unangenehm reduziert.

Insgesamt lässt sich mit der erfindungsgemäßen Belüftungsvorrichtung die Anzahl der von einer Person, die sich in dem Raum befindet, als störend wahrgenommenen Geräusche, reduzieren. Der Geräuschpegel der Belüftungsvorrichtung kann darüber hinaus signifikant gesenkt werden, wodurch die Akzeptanz der Belüftungsvorrichtung durch die im Raum befindlichen Personen verbessert werden kann, da diese die Belüftungsvorrichtung nicht mehr als störend wahrnehmen, insbesondere dann, wenn es sich beispielsweise bei dem Raum um das Schlafzimmer handelt. Die der Geräuschreduzierung dienenden Elemente der Belüftungsvorrichtung sind von der Innenseite leicht zugänglich und daher wartungsfreundlich.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen, sofern die resultierende Kombination oder Alleinstellung unter den Gegenstand der Ansprüche fällt.

### Kurze Beschreibung der Zeichnung

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen
- Fig. 1: eine Gesamtansicht einer Belüftungsvorrichtung,
- Fig. 2: eine Explosionszeichnung der Belüftungsvorrichtung,
- Fig. 3: eine Geräuschreduzierungseinheit der Belüftungsvorrichtung aus Fig. 2,
- Fig. 4: eine Explosionszeichnung der Geräuschreduzierungseinheit,
- Fig. 5A: eine Frontansicht der Geräuschreduzierungseinheit mit einer Schnittmarkierung und
- Fig. 5B: einen Schnitt durch die Geräuschreduzierungseinheit.

### Ausführliche Beschreibung der Zeichnung

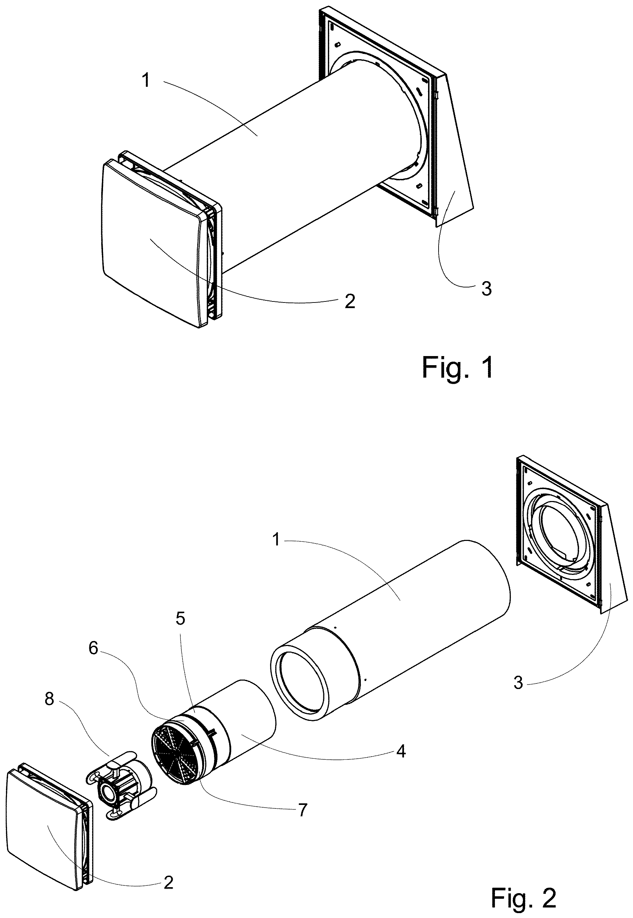

Fig. 1 zeigt die Gesamtansicht einer Belüftungsvorrichtung mit einer Wandeinbauhülse 1, einen Innenabschluss 2 und einen Außenabschluss 3. Die Wandeinbauhülse 1 wird in eine entsprechende Durchbohrung einer Wand eines Raumes eingesetzt, welche eine Innenseite des Raumes mit einer Außenseite verbindet. Die Außenseite ist dabei eine Außenseite des Gebäudes, in dem sich der Raum befindet, so dass der Raum belüftet werden kann. Der Innenabschluss 2 dient zur Umlenkung des Luftstroms sowie zur Vermeidung von Zug, der von manchen Menschen als unangenehm empfunden wird. Der Außenabschluss 3 dient dem Schutz vor Wettereinflüssen sowie vor Verschmutzung und allgemein dem Eindringen von Fremdkörpern und von Tieren, beispielsweise Vögeln. Im Innenabschluss 2 können außerdem elektronische Elemente zur Steuerung der Belüftungsvorrichtung oder einzelner Teile davon untergebracht werden.

Fig. 2 zeigt eine Explosionszeichnung der in Fig. 1 gezeigten Belüftungsvorrichtung mit den einzelnen Elementen, die in der Wandeinbauhülse 1 untergebracht sind. In der Reihenfolge von der Außenseite zur Innenseite handelt es sich dabei um einen Wärmespeicher 4, ein äußeres Leitwerk 5 einen Ventilator 6, der hier als Axialventilator ausgestaltet ist, und ein inneres Leitwerk 7. Zwischen dem inneren Leitwerk 7 und dem Innenabschluss 2 ist eine Geräuschreduzierungseinheit 8 angeordnet, mit welcher aktiv einerseits solche Geräusche reduziert werden, die vom Motor des Ventilators 6 herrühren, und andererseits solche Geräusche reduziert werden, welche vom Luftstrom selbst herrühren oder von der Außenseite durch den Luftstrom zu Innenseite transportiert werden.

Der Ventilator 6 hat einen Motor und einer Rotationsachse, um welche er durch den Motor angetrieben rotiert. Der Ventilator 6 ist in einem ersten Betriebszustand mit einer Zuluft-Förderrichtung von der Außenseite zur Innenseite zur Förderung von Zuluft von der Außenseite zur Innenseite betreibbar. Optional ist der Ventilator 6 auch in einem zweiten Betriebszustand betreibbar, in welchem er Abluft entlang einer Abluft-Förderrichtung von der Innenseite des Raumes zur Außenseite fördert. Zwischen den beiden Betriebszuständen kann entsprechend einer vorgegebenen Lüftersteuerung in Intervallen umgeschaltet werden.

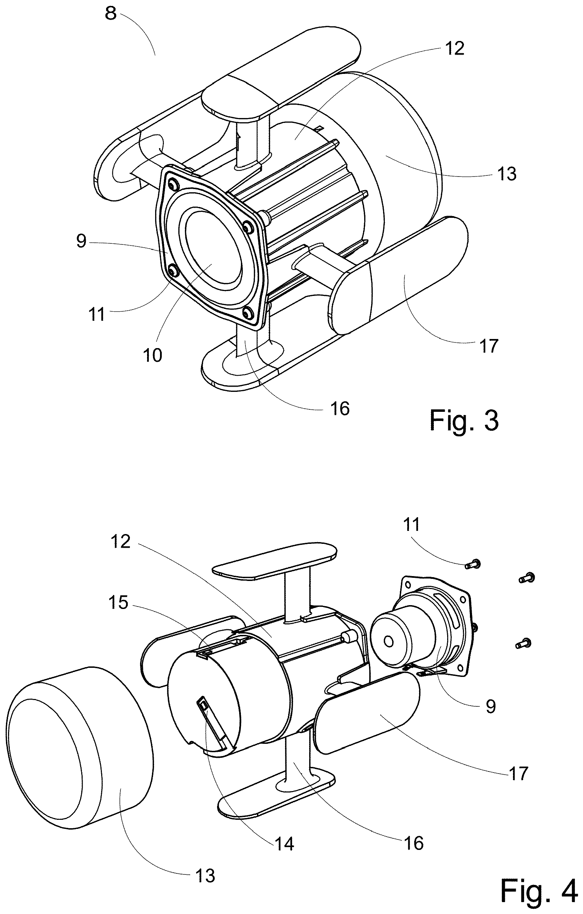

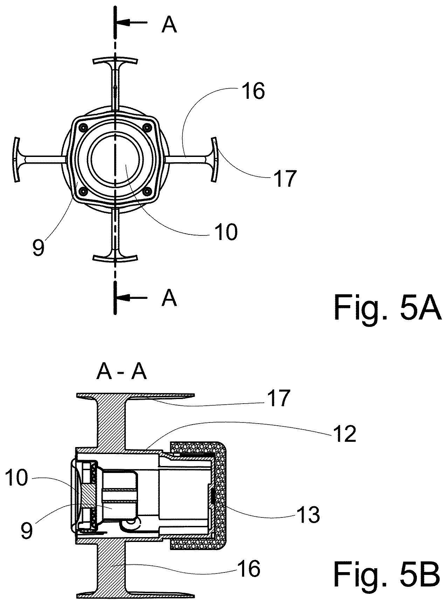

Die Geräuschreduzierungseinheit 8 umfasst mindestens einen Lautsprecher, mehrere Mikrofone und eine Steuereinheit und wird im Folgenden anhand der Fig. 3 bis 5 näher erläutert. Fig. 3 zeigt die Geräuschreduzierungseinheit 8 aus Fig. 2 im Detail. Sie umfasst einen Lautsprecher 9 mit einer Membran 10; der Lautsprecher 9 ist mittels Schrauben 11 - gezeigt sind hier vier Schrauben 11 - in einem Gehäuse 12 fixiert. Die Membran 10 des Lautsprechers 9 ist axial auf der Rotationsachse des Ventilators bzw. auf einer Verlängerung dieser Rotationsachse angeordnet; die - hier nicht gezeigte - Rotationsachse verläuft durch den Mittelpunkt der runden Membran 10.die Membran 10 strahlt in Zuluft-Förderrichtung Schall ab. Die Mikrofone sind auf der dem Lautsprecher abgewandten Seite der Geräuschreduzierungseinheit 8 angeordnet, welche zum Ventilator 6 weist. Sie sind auf der Außenseite des Gehäuses 12 fixiert, in Fig. 3 jedoch von einer Filterkappe 13 verdeckt. Die Filterkappe 13 ist optional und dient dazu, hochfrequente Geräusche, welche durch das Vorbeiströmen des Luftstroms an den Mikrofonen entstehen, jedoch für eine Person, die sich im Raum aufhält, nicht wahrnehmbar wären, herauszufiltern.

Die Mikrofone sind in der Explosionszeichnung in Fig. 4 zu sehen. Ein erstes Mikrofon 14 ist axial auf der Rotationsachse innenraumseitig des Ventilators 6 angeordnet und auf den Ventilator 6 gerichtet. Es nimmt überwiegend vom Motor des Ventilators 6 verursachte Geräuschsignale auf. Ein zweites Mikrofon 15 ist radial zwischen der Rotationsachse und der Wandeinbauhülse 1 angeordnet. Es ist entweder auf die Rotationsachse oder auf die Wandeinbauhülse 1 gerichtet und nimmt überwiegend vom Luftstrom verursachte Geräuschsignale und vom Luftstrom von der Außenseite zur Innenseite transportierte Geräuschsignale auf. Unter "überwiegend" wird dabei verstanden, dass von den aufgenommenen Geräuschsignalen des ersten Mikrofons 14 mehr als 50 % von dem Motor des Ventilators 6 stammen und von den aufgenommenen Geräuschsignalen des zweiten Mikrofons 15 weniger als 50 % vom Motor des Ventilators 6 stammen, sondern mehr von Geräuschen, welche durch den im Gerät die Bauteile umströmenden Luftströmen verursacht werden. Eine 100-prozentige Trennung der Signalanteile in solche vom Motor und solche vom Luftstrom bei der Aufnahme jedes der beiden Mikrofone 14, 15 ist nicht möglich, jedoch wird durch die spezielle Anordnung der Mikrofone 14, 15 dafür gesorgt, dass beim ersten Mikrofon 14 der Anteil der Geräuschsignale des Motors dominiert und beim zweiten Mikrofon 15 der Anteil der Geräuschsignale des Luftstroms, welcher auch die Signale umfasst, die von der Außenseite herein transportiert werden. Das erste Mikrofon 14 ist axial angeordnet, in diesem Bereich findet zum einen aufgrund des axial angeordneten Motors des Ventilators 6 und zum anderen aufgrund des axial angeordneten Gehäuses 12 kaum Transport von Luft statt, bzw. wird die Luft hier mit sehr stark verminderter Geschwindigkeit transportiert. Die Geräuschsignale des Motors dominieren daher hier. Das zweite Mikrofon 15 weist in Richtung der Wandeinbauhülse 1 und ist daher für vom Motor kommende Geräuschsignale weniger empfindlich bzw. schlechter erreichbar. Die Signale des Luftstroms und der von außen kommenden Geräusche dominieren hier. Bei einer Ausrichtung des zweiten Mikrofons 15 in Richtung der Rotationsachse werden zwar mehr Geräusche des Motors detektiert, diese dominieren jedoch nicht. Bei der letztgenannten Ausrichtung in Richtung der Rotationsachse kann das zweite Mikrofon 15 auch nahe der Wandeinbauhülse 1 angeordnet sein, beispielsweise an dieser fixiert. Wenn die Mikrofone 14, 15 jedoch beide vorteilhaft am Gehäuse 12 befestigt sind, kann dies den Wechsel bei Defekten erleichtern, da die gesamte Geräuschreduzierungseinheit 8 auf einmal ausgetauscht werden kann. Bei der Anbringung am Gehäuse 12 sind allerdings dem Abstand des zweiten Mikrofons 15 von der Rotationsachse Grenzen gesetzt, da das Gehäuse 12 nicht allzu groß dimensioniert werden kann, um den Luftstrom nicht zu behindern. Teilt man den Abstand zwischen der Rotationsachse und der Wandeinbauhülse 1 in drei gleiche Teile, so ist das zweite Mikrofon 15 bevorzugt im mittleren Drittel angeordnet, hier lassen sich die Geräusche des Luftstroms besonders unverfälscht und relativ ungestört durch den Motor aufnehmen. Bevorzugt sollte der Abstand zwischen dem zweiten Mikrofon 15 und der Rotationsachse etwa die Hälfte des Abstandes zwischen der Rotationsachse und der Wandeinbauhülse 1 betragen.

Das erste Mikrofon 14 und das zweite Mikrofon 15 sind beide bevorzugt als MEMS-Mikrofone ausgebildet. Dies ermöglicht eine flache Ausführung, was insbesondere für das zweite Mikrofon 15 von Vorteil ist.

Der Abstand zwischen dem ersten Mikrofon 14 und der Membran 10 des Lautsprechers 9 und ebenso der Abstand zwischen dem zweiten Mikrofon 15 und der Membran 10 des Lautsprechers 9 beträgt hier etwa 100 Millimeter und sollte allgemein nicht mehr als 350 mm betragen, damit die Wegstrecke des Schalls zwischen Mikrofon und Lautsprecher nicht zu groß wird. Je größer die Wegstrecke, desto höher die Gefahr, dass die Signale auf dem Weg zwischen Mikrofonen und Lautsprecher verfälscht werden und die Geräuschreduzierung nicht mehr optimal ist. Der Abstand zwischen den Mikrofonen 14, 15 und der Membran 10 ist in der Steuereinheit hinterlegt und kann bei der Berechnung von Geräuschgegensignalen berücksichtigt werden.

Allgemein ist die Steuereinheit zur Erzeugung von Geräuschgegensignalen auf Basis der von den Mikrofonen 14, 15 aufgenommenen Geräuschsignale und zur Übermittlung der Geräuschgegensignale an den Lautsprecher 9 zur Abstrahlung als Schall über die Membran 10 von dort ausgebildet, so dass auf der Innenseite des Raumes solche Geräusche, die vom Luftstrom und/oder vom Motor des Ventilators erzeugt werden, und solche Geräusche, die von der Außenseite kommen, gedämpft werden.

Das Gehäuse 12 ist mit einer Rotationssymmetrie um die Rotationsachse bzw. die Verlängerung der Rotationsachse des Ventilators 6 ausgebildet und der Lautsprecher 9 darin fixiert. Das Gehäuse 12 selbst ist über Abstandshalter in der Wandeinbauhülse 1 fixiert. Die Abstandshalter sind so ausgebildet, dass sie den Luftstrom möglichst wenig behindern. Jeder Abstandshalter umfasst einen Schaft 16, welcher in Bezug auf den Luftstrom stromlinienförmig ausgebildet ist, so dass dieser möglichst ungehindert einem Schaft 16 vorbeiströmen kann. Der Schaft 16 ist mit seinem einen Ende am Gehäuse 12 fixiert. Am anderen Ende des Schaftes 16 ist ein Stützelement 17 angebracht, welches an einer Innenseite der Wandeinbauhülse 1 oder einer darin angeordneten Schalldämmungshülse anliegt. Je nach Lage des Schaftes 16 kann dieser auch als Aufnahme für das zweite Mikrofon 15 ausgebildet sein. Für diesen Zweck wäre eine Anordnung des Schaftes 16 weiter weg vom Lautsprecher 9 und näher am Ende des Gehäuses 12 in Richtung des Ventilator 6 vorteilhafter.

Mindestens 3 Abstandshalter sind notwendig, um der Geräuschreduzierungseinheit 8 einen sicheren Halt in der Wandeinbauhülse 1 zu ermöglichen; die hier gezeigte Geräuschreduzierungseinheit 8 verfügt über vier Abstandshalter. Durch die 4 Stützelemente 17 wird das Gehäuse 12 mitsamt seinen Einbauten und Anbauten in der Wandeinbauhülse 1 abgestützt. Die Verbindung der Stützelemente 17 zur Wandeinbauhülse 1 bzw. einer darin angeordneten Schalldämmungshülse kann kraftschlüssig beispielsweise durch Klemmen erfolgen, aber auch formschlüssig beispielsweise durch Verkleben oder Verschrauben. Durch einen der Abstandshalter können Kabel geführt werden, die der Stromversorgung des Lautsprechers 9 und gegebenenfalls einer im Gehäuse 12 angeordneten Steuereinheit sowie der Mikrofone 14, 15 dienen.

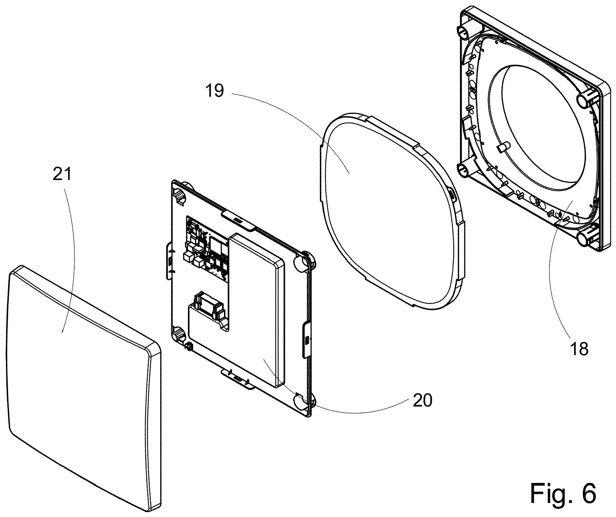

In einer besonders bevorzugten Ausgestaltung ist die Steuereinheit jedoch im Innenabschluss 2 angeordnet. Dies ist in Fig. 6 dargestellt. Fig. 6 zeigt eine Explosionszeichnung des Innenabschlusses 2. Sie umfasst von rechts nach links bzw. mit zunehmender Entfernung von der Wandeinbauhülse 1 ein Verbindungsstück 18, welches auch als Grundplatte für den Innenabschluss 2 dient, mit einer zylinderförmigen Aussparung, die etwa dem Durchmesser der Wandeinbauhülse 1 entspricht. Diese bildet den Abschluss des Luftkanals der Belüftungsvorrichtung nach innen. Auf das Verbindungsstück 18 wird ein Filterelement 19 gesetzt. Das Filterelement 19 schützt eine dahinter angeordnete Steuereinheit 20. Diese ist mindestens zur Steuerung der Geräuschreduzierungseinheit 8 ausgelegt, kann aber auch ebenfalls die Steuerung für den Ventilator 6 bzw. die gesamte Belüftungsvorrichtung beinhalten. Auf der Steuereinheit 20 sitzt ein Abdeckelement 21, welche die Steuereinheit 20und das Verbindungstück 18 schützt, sie ist bevorzugt aus stabilem Kunststoff.

Im Betrieb nimmt das erste Mikrofon 14 überwiegend die von einem Motor des Ventilators 6 erzeugte Geräuschsignale auf und übermittelt diese an die Steuereinheit 20. Das zweite Mikrofon 15 nimmt überwiegend Geräuschsignale auf, die von dem Luftstrom erzeugt werden oder von der Außenseite des Raumes in Zuluft-Förderrichtung transportiert werden, und übermittelt diese an die Steuereinheit 20. Dabei ist es belanglos, ob die Belüftungsvorrichtung in dem ersten Betriebszustand zur Förderung von Zuluft oder im zweiten Betriebszustand zur Förderung von Abluft nach außen betrieben wird, die Geräuschreduzierung ist in beiden Betriebszuständen möglich. In jedem Falle erzeugt die Steuereinheit 20 auf Basis der von den Mikrofonen 14 und 15 aufgenommenen Geräuschsignale Geräuschgegensignale, die sie dann an den Lautsprecher 9 übermittelt. Der Lautsprecher 9 strahlt über eine Membran 10 die Geräuschgegensignale in Zuluft-Förderrichtung, also in Richtung der Innenseite des Raumes, als Schall ab, so dass auf der Innenseite des Raumes solche Geräusche, die vom Luftstrom oder vom Motor des Ventilators 6 erzeugt werden, und solche Geräusche, die von der Außenseite kommen, gedämpft werden.

Die meisten Belüftungsvorrichtungen können im Reversierbetrieb betrieben werden. Dabei wird periodisch die Drehrichtung des Ventilators 6 und damit die Luftförderrichtung geändert. Dies ist mit einem charakteristischen Geräusch verbunden, was sich von dem üblichen Lüftergeräusch unterscheidet. Diese Änderung des Hintergrundgeräusches wird von vielen Personen unterschwellig als unangenehm empfunden, wobei im Reversierbetrieb die Luftförderrichtung relativ häufig - typischerweise im Minutentakt bis hin zur einigen wenigen Minuten - gewechselt wird. In einer besonders bevorzugten Ausgestaltung erzeugt die Steuereinheit daher während des Umschaltens zwischen dem ersten und zweiten Betriebszustand und umgekehrt Geräuschgegensignale, welche einem Grundgeräusch der Belüftungsvorrichtung entsprechen, so dass ein gleichbleibendes Geräuschbild erzeugt wird, wenn die Geräuschgegensignale von der Membran 10 abgestrahlt werden, und ein mit dem umschalten verbundenes Geräusch, ein Umschaltgeräusch, vermindert oder sogar eliminiert wird. Dieses Grundgeräusch der Belüftungsvorrichtung kann beispielsweise im Rahmen einer Kalibrierung der Geräuschreduzierungseinheit 8 aufgenommen und in der Steuereinheit gespeichert werden, wozu diese bevorzugt mit einem Datenspeicher ausgestaltet ist.

Durch die Ausstattung einer Belüftungsvorrichtung mit einer Geräuschreduzierungseinheit 8 wie vorangehend beschrieben lässt sich die Schallemission deutlich reduzieren, von Personen als unangenehm wahrgenommenen Geräusche, die sich aus dem Betrieb der Belüftungsvorrichtung ergeben oder von außen hineingetragen werden, lassen sich gut unterdrücken. Die Geräuschreduzierungseinheit 8 kann auch als Nachrüstungsbausatz mit einer Steuerung, die in das Lautsprechergehäuse integriert ist, konzipiert werden, ihre Anbringung in der Wandeinbauhülse erfordert nur wenige Handgriffe. Die Steuereinheit 20 kann auf einfache Weise ausgetauscht werden.

### Bezugszeichenliste

- 1: Wandeinbauhülse
- 2: Innenabschluss
- 3: Außenabschluss
- 4: Wärmespeicher
- 5: äußeres Leitwerk
- 6: Ventilator
- 7: inneres Leitwerk
- 8: Geräuschreduzierungseinheit
- 9: Lautsprecher
- 10: Membran
- 11: Schraube
- 12: Gehäuse
- 13: Filterkappe
- 14: erstes Mikrofon
- 15: zweites Mikrofon
- 16: Schaft
- 17: Stützelement
- 18: Verbindungsstück
- 19: Filterelement
- 20: Steuereinheit
- 21: Abdeckelement

## Patentansprüche

1. Belüftungsvorrichtung zum Be- und Entlüften eines Raumes, umfassend
- eine Wandeinbauhülse (1) zur Verbindung einer Innenseite des Raumes mit einer Außenseite,
- mindestens einen in der Wandeinbauhülse (1) angeordneten Ventilator (6) mit einem Motor und einer Rotationsachse, der in einem ersten Betriebszustand mit einer Zuluft-Förderrichtung von der Außenseite zur Innenseite zur Förderung von Zuluft von der Außenseite zur Innenseite des Raumes betreibbar ist, und
- Mittel zur aktiven Geräuschreduzierung mit mindestens einem Lautsprecher (9), mehreren Mikrofonen (14, 15) und einer Steuereinheit (20), **dadurch gekennzeichnet, dass**
- eine Membran (10) des Lautsprechers (9) innenraumseitig des Ventilators (6) angeordnet ist und in Zuluft-Förderrichtung Schall abstrahlt,
- ein erstes Mikrofon (14) axial auf der Rotationsachse innenraumseitig angeordnet und auf den Ventilator (6) gerichtet ist, wobei das erste Mikrofon (14) überwiegend vom Motor des Ventilators (6) verursachte Geräuschsignale aufnehmend ausgebildet ist,
- ein zweites Mikrofon (15) radial zwischen der Rotationsachse und der Wandeinbauhülse (1) angeordnet und auf die Rotationsachse oder die Wandeinbauhülse (1) gerichtet ist, wobei das zweite Mikrofon (15) überwiegend vom Luftstrom verursachte Geräuschsignale aufnehmend ausgebildet ist,
- die Steuereinheit (20) zur Erzeugung von Geräuschgegensignalen auf Basis der von den Mikrofonen (14, 15) aufgenommenen Geräuschsignale und zur Übermittlung der Geräuschgegensignale an den Lautsprecher (9) zur Abstrahlung als Schall von dort ausgebildet ist, so dass auf der Innenseite des Raumes solche Geräusche, die vom Luftstrom und/oder vom Motor des Ventilators (6) erzeugt werden, und solche Geräusche, die von der Außenseite kommen, gedämpft sind.

2. Belüftungsvorrichtung nach Anspruch 1, **dadurch gekennzeichnet, dass** der Ventilator (6) als Axialventilator ausgestaltet ist und der Lautsprecher (9) in einem axial auf der Verlängerung der Rotationsachse angeordneten Gehäuse (12), welches vorzugsweise mit einer Rotationssymmetrie um die Rotationsachse ausgebildet ist, fixiert ist, wobei die Membran (10) axial auf oder neben der Rotationsachse angeordnet ist.

3. Belüftungsvorrichtung nach Anspruch 2, **dadurch gekennzeichnet, dass** das Gehäuse (12) über Abstandshalter in der Wandeinbauhülse (1) fixiert ist.

4. Belüftungsvorrichtung nach einem der Ansprüche 2 oder 3, **dadurch gekennzeichnet, dass** die Steuereinheit (20) in dem Gehäuse (12) angeordnet ist.

5. Belüftungsvorrichtung nach einem der Ansprüche 1 bis 3, umfassend außerdem mindestens einen Innenabschluss (2) zur Abdeckung der Wandeinbauhülse (1) an der Innenseite zur Abdeckung der Wandeinbauhülse (1) und/oder zur Ablenkung des Luftstroms, **dadurch gekennzeichnet, dass** die Steuereinheit (20) im Innenabschluss (2) angeordnet ist.

6. Belüftungsvorrichtung nach einem der Ansprüche 1 bis 5, **dadurch gekennzeichnet, dass** die Mikrofone (14, 15) als MEMS-Mikrofone ausgebildet sind.

7. Belüftungsvorrichtung nach einem der Ansprüche 1 bis 6, bei dem der Lautsprecher (9) in einem Gehäuse (12) angeordnet ist, **dadurch gekennzeichnet, dass** die Mikrofone (14, 15) auf den Außenseiten des Gehäuses (12) fixiert sind.

8. Belüftungsvorrichtung nach Anspruch 7, **dadurch gekennzeichnet, dass** die Mikrofone (14, 15) mit einer die Geräuschsignale teilweise filternden Filterkappe (13) gegen den Luftstrom abgedeckt sind.

9. Belüftungsvorrichtung nach einem der Ansprüche 1 bis 8, **dadurch gekennzeichnet, dass** der Abstand zwischen dem ersten Mikrofon (14) und dem Lautsprecher (9) und zwischen dem zweiten Mikrofon (15) und dem Lautsprecher (9) jeweils nicht mehr als 350 mm beträgt.

10. Belüftungsvorrichtung nach Anspruch 9, **dadurch gekennzeichnet, dass** der Abstand zwischen dem zweiten Mikrofon (15) und der Rotationsachse ein Drittel bis zwei Drittel, bevorzugt die Hälfte des Abstandes zwischen der Rotationsachse und der Wandeinbauhülse (1) beträgt.

11. Belüftungsvorrichtung nach einem der Ansprüche 1 bis 10, **dadurch gekennzeichnet, dass** der Ventilator (6) in einem zweiten Betriebszustand zur Förderung von Abluft entlang einer Abluft-Förderrichtung von der Innenseite zur Außenseite des Raumes betreibbar ist

12. Verfahren zur Geräuschreduzierung in einer Belüftungsvorrichtung mit mindestens einem Ventilator (6), der in einer Wandeinbauhülse (1) eingebaut ist, um eine Rotationsachse rotiert und dabei in einem ersten Betriebszustand Zuluft entlang einer Zuluft-Förderrichtung von einer Außenseite eines Raumes zu einer Innenseite des Raumes fördert, bei dem
- ein erstes Mikrofon (14) überwiegend von einem Motor des Ventilators (6) erzeugte Geräuschsignale aufnimmt und an eine Steuereinheit (20) übermittelt,
- ein zweites Mikrofon (15) überwiegend von einem Luftstrom erzeugte Geräuschsignale und von der Außenseite des Raumes in Zuluft-Förderrichtung transportierte Geräuschsignale aufnimmt und an die Steuereinheit (20) übermittelt,
- die Steuereinheit (20) auf Basis der von den Mikrofonen (14, 15) aufgenommenen Geräuschsignale Geräuschgegensignale erzeugt, die Geräuschgegensignale an einen auf der Rotationsachse angeordneten Lautsprecher (9) übermittelt,
- der Lautsprecher (9) über eine Membran (10) die Geräuschgegensignale in Zuluft-Förderrichtung als Schall abstrahlt, so dass auf der Innenseite des Raumes solche Geräusche, die vom Luftstrom und vom Motor des Ventilators (6) erzeugt und solche Geräusche, die von der Außenseite kommen, gedämpft werden.

13. Verfahren nach Anspruch 12, bei dem der Ventilator (6) in einem zweiten Betriebszustand Abluft entlang einer Abluft-Förderrichtung von der Innenseite des Raumes zur Außenseite fördert und zwischen dem ersten und zweiten Betriebszustand umgeschaltet werden kann, **dadurch gekennzeichnet, dass** die Steuereinheit (20) während des Umschaltens Geräuschsignale erzeugt, die einem Grundgeräusch der Belüftungsvorrichtung entsprechen, so dass ein gleichbleibendes Geräuschbild erzeugt und ein Umschaltgeräusch eliminiert wird.

## Claims

1. A ventilation device for aerating and deaerating a room, comprising:
- a wall installation sleeve (1) for connecting an inside of the room with an outside,
- at least one fan (6), which is arranged in the wall installation sleeve (1) and has a motor and an axis of rotation, said fan being operable in a first operating state with an air conveying direction from the outside to the inside for conveying supply air from the outside to the inside of the room, and
- means for active noise reduction with at least one loudspeaker (9), several microphones (14, 15) and a control unit (20), **characterized in that**
- a diaphragm (10) of the loudspeaker (9) is arranged on the interior side of the fan (6) and emits sound in the supply air conveying direction,
- a first microphone (14) is arranged axially on the axis of rotation on the interior side and is directed towards the fan (6), the first microphone (14) being designed to pick up predominantly noise signals caused by the motor of the fan (6),
- a second microphone (15) is arranged radially between the axis of rotation and the wall installation sleeve (1) and is directed towards the axis of rotation or the wall installation sleeve (1), the second microphone (15) being designed to pick up predominantly noise signals caused by the air flow,
- the control unit (20) is designed for generating noise counter signals on the basis of the noise signals picked up by the microphones (14, 15) and for transmitting the noise counter signals to the loudspeaker (9) for radiation as sound therefrom, so that on the inside of the room such noises generated by the air flow and/or the motor of the fan (6) and such noises coming from the outside are attenuated.

2. The ventilation device according to claim 1, **characterized in that** the fan (6) is designed as an axial fan and the loudspeaker (9) is fixed in a housing (12), which is arranged axially on the extension of the axis of rotation and is preferably designed with rotational symmetry about the axis of rotation, the diaphragm (10) being arranged axially on or next to the axis of rotation.

3. The ventilation device according to claim 2, **characterized in that** the housing (12) is fixed in the wall installation sleeve (1) via spacers.

4. The ventilation device according to any one of claims 2 or 3, **characterized in that** the control unit (20) is arranged in the housing (12).

5. The ventilation device according to any one of claims 1 to 3, further comprising at least one inner closure (2) for covering the wall installation sleeve (1) on the interior side for covering the wall installation sleeve (1) and/or for deflecting the air flow, **characterized in that** the control unit (20) is arranged in the inner closure (2).

6. The ventilation device according to any one of claims 1 to 5, **characterized in that** the microphones (14, 15) are designed as MEMS microphones.

7. The ventilation device according to any one of claims 1 to 6, wherein the loudspeaker (9) is arranged in a housing (12), **characterized in that** the microphones (14, 15) are fixed on the outer sides of the housing (12).

8. The ventilation device according to claim 7, **characterized in that** the microphones (14, 15) are covered against the air flow with a filter cap (13) partially filtering the noise signals.

9. The ventilation device according to any one of claims 1 to 8, **characterized in that** the distance between the first microphone (14) and the loudspeaker (9) and between the second microphone (15) and the loudspeaker (9), respectively, is not more than 350 mm.

10. The ventilation device according to claim 9, **characterized in that** the distance between the second microphone (15) and the axis of rotation is one third to two thirds, preferably half, of the distance between the axis of rotation and the wall installation sleeve (1).

11. The ventilation device according to any one of claims 1 to 10, **characterized in that** the fan (6) is operable in a second operating state for conveying exhaust air along an exhaust air conveying direction from the inside to the outside of the room.

12. A method for noise reduction in a ventilation device with at least one fan (6), which is installed in a wall installation sleeve (1), rotates about an axis of rotation and thereby, in a first operating state, conveys supply air along a supply air conveying direction from an outside of a room to an inside of the room, wherein
- a first microphone (14) picks up sound signals generated predominantly by a motor of the fan (6) and transmits them to a control unit (20),
- a second microphone (15) picks up sound signals predominantly generated by an air flow and sound signals transported from the outside of the room in the supply air conveying direction and transmits them to the control unit (20),
- the control unit (20) generates noise counter signals on the basis of the noise signals picked up by the microphones (14, 15), the noise counter signals are transmitted to a loudspeaker (9) arranged on the axis of rotation,
- the loudspeaker (9) emits the noise counter-signals in the supply air conveying direction as sound via a diaphragm (10), so that on the inside of the room such noises generated by the air flow and by the motor of the fan (6) and such noises coming from the outside are attenuated.

13. The method according to claim 12, wherein the fan (6) in a second operating state conveys exhaust air along an exhaust air conveying direction from the inside of the room to the outside and can be switched between the first and second operating states, **characterized in that** the control unit (20) during the switching generates noise signals corresponding to a basic noise of the ventilation device so that a constant noise pattern is generated and switching noise is eliminated.

## Revendications

1. Dispositif d'aération pour aérer et désaérer un local, comprenant
- un manchon de montage mural (1) pour relier un côté intérieur du local à un côté extérieur,
- au moins un ventilateur (6), disposé dans le manchon de montage mural (1), avec un moteur et un axe de rotation, et pouvant être actionné dans un premier état de fonctionnement avec une direction de transport d'air amené de l'extérieur vers l'intérieur pour le transport d'air amené de l'extérieur vers l'intérieur du local, et
- des moyens de réduction active du bruit comprenant au moins un haut-parleur (9), plusieurs microphones (14, 15) et une unité de commande (20), **caractérisé**
- **en ce qu'**une membrane (10) du haut-parleur (9) est disposée du côté de l'intérieur du ventilateur (6) et émet du son dans la direction de transport de l'air amené,
- **en ce qu'**un premier microphone (14) est disposé axialement sur l'axe de rotation du côté de l'intérieur et est dirigé vers le ventilateur (6), le premier microphone (14) étant conçu pour enregistrer principalement des signaux sonores provoqués par le moteur du ventilateur (6),
- **en ce qu'**un deuxième microphone (15) est disposé radialement entre l'axe de rotation et le manchon de montage mural (1) et est dirigé vers l'axe de rotation ou le manchon de montage mural (1), le deuxième microphone (15) étant conçu pour enregistrer principalement des signaux sonores provoqués par le flux d'air,
- **en ce que** l'unité de commande (20) est conçue pour générer des signaux sonores opposés sur la base des signaux sonores enregistrés par les microphones (14, 15) et pour transmettre les signaux sonores opposés au haut-parleur (9) pour qu'ils soient diffusés sous forme de son à partir de celui-ci, de sorte que, sur le côté intérieur du local, de tels bruits générés par le flux d'air et/ou le moteur du ventilateur (6) et de tels bruits provenant de l'extérieur sont atténués.

2. Dispositif d'aération selon la revendication 1, **caractérisé en ce que** le ventilateur (6) est conçu comme un ventilateur axial et le haut-parleur (9) est fixé dans un boîtier (12), qui est disposé axialement sur le prolongement de l'axe de rotation et est de préférence conçu avec une symétrie de rotation autour de l'axe de rotation, la membrane (10) étant disposée axialement sur ou à côté de l'axe de rotation.

3. Dispositif d'aération selon la revendication 2, **caractérisé en ce que** le boîtier (12) est fixé dans le manchon de montage mural (1) par des entretoises.

4. Dispositif d'aération selon l'une quelconque des revendications 2 ou 3, **caractérisé en ce que** l'unité de commande (20) est disposée dans le boîtier (12).

5. Dispositif d'aération selon l'une quelconque des revendications 1 à 3, comprenant en outre au moins une fermeture intérieure (2) pour recouvrir le manchon de montage mural (1) sur le côté intérieur pour recouvrir le manchon de montage mural (1) et/ou pour dévier le flux d'air, **caractérisé en ce que** l'unité de commande (20) est disposée dans la fermeture intérieure (2).

6. Dispositif d'aération selon l'une quelconque des revendications 1 à 5, **caractérisé en ce que** les microphones (14, 15) sont des microphones MEMS.

7. Dispositif d'aération selon l'une quelconque des revendications 1 à 6, dans lequel le haut-parleur (9) est disposé dans un boîtier (12), **caractérisé en ce que** les microphones (14, 15) sont fixés sur les faces extérieures du boîtier (12).

8. Dispositif d'aération selon la revendication 7, **caractérisé en ce que** les microphones (14, 15) sont recouverts d'un capuchon filtrant (13) filtrant partiellement les signaux sonores contre le flux d'air.

9. Dispositif d'aération selon l'une quelconque des revendications 1 à 8, **caractérisé en ce que** la distance entre le premier microphone (14) et le haut-parleur (9) et entre le deuxième microphone (15) et le haut-parleur (9) n'est pas supérieure à 350 mm respectivement.

10. Dispositif d'aération selon la revendication 9, **caractérisé en ce que** la distance entre le deuxième microphone (15) et l'axe de rotation est comprise entre un tiers et deux tiers, de préférence la moitié de la distance entre l'axe de rotation et le manchon de montage mural (1).

11. Dispositif d'aération selon l'une quelconque des revendications 1 à 10, **caractérisé en ce que** le ventilateur (6) peut être actionné dans un deuxième état de fonctionnement pour transporter de l'air d'évacuation le long d'une direction de transport d'air d'évacuation de l'intérieur vers l'extérieur du local.

12. Procédé de réduction du bruit dans un dispositif de ventilation avec au moins un ventilateur (6) qui est monté dans un manchon de montage mural (1), tourne autour d'un axe de rotation et transporte ainsi, dans un premier état de fonctionnement, de l'air amené le long d'une direction de transport d'air amené depuis un côté extérieur d'un local vers un côté intérieur du local, dans lequel
- un premier microphone (14) enregistre des signaux sonores générés principalement par un moteur du ventilateur (6) et les transmet à une unité de commande (20),
- un deuxième microphone (15) enregistre des signaux sonores générés principalement par un flux d'air et des signaux sonores transportés depuis l'extérieur du local dans la direction de transport de l'air amené et les transmet à l'unité de commande (20),
- l'unité de commande (20) génère des signaux sonores opposés sur la base des signaux sonores enregistrés par les microphones (14, 15), transmet les signaux sonores opposés à un haut-parleur (9) disposé sur l'axe de rotation,
- le haut-parleur (9) émet, par l'intermédiaire d'une membrane (10), les signaux sonores opposés sous forme de son dans la direction de transport de l'air amené, de sorte que, sur le côté intérieur du local, de tels bruits qui sont générés par le flux d'air et le moteur du ventilateur (6) et de tels bruits qui proviennent de l'extérieur sont atténués.

13. Procédé selon la revendication 12, dans lequel, dans un deuxième état de fonctionnement, le ventilateur (6) transporte de l'air d'évacuation le long d'une direction de transport d'air d'évacuation de l'intérieur du local vers l'extérieur et peut être commuté entre le premier et le deuxième état de fonctionnement, **caractérisé en ce que** l'unité de commande (20) génère, pendant la commutation, des signaux sonores qui correspondent à un bruit de fond du dispositif de ventilation, de sorte qu'une image sonore constante est produite et qu'un bruit de commutation est éliminé.
